# EUROPEAN PATENT APPLICATION

(11) **EP 4 403 038 A1**
(43) Date of publication of application: **24.07.2024**
(21) Application number: 24151536.0
(22) Date of filing: 12.01.2024
(51) Int. Cl.: A23L 2/52, A23C 11/10, C12C 1/16, C12C 5/00, C12C 7/16, C12F 3/06, A23J 1/00, A23J 1/12

(54) **A METHOD FOR PRODUCTION OF BEVERAGES**

(30) Priority: 17.01.2023 EP 23152104
(71) Applicant: Tetra Laval Holdings & Finance S.A., 1009 Pully (CH)
(72) Inventor: Börejsson, Erik, 22186 Lund (SE); Stanic, Mirko, 8152 Glattbrugg (CH); Paul, Bernardo, 22186 Lund (SE)
(74) Representative: Tetra Pak - Patent Attorneys SE

(57) **Abstract**

A method is provided to improve resource-efficiency in beer production by enabling production of a non-fermentable beverage by use of brewer's spent grain, BSG. The method comprises: obtaining (203) BSG from a process of producing beer, mixing (204) the BSG with water into a slurry, processing (205) the slurry for generation of a precursor liquid, and storing (206), during a storage time period, the precursor liquid for subsequent use as base material for production of the non-fermented beverage, wherein the storage time period exceeds 2 hours. The method is simple to integrate with existing beer production. The dependence between the production of non-fermented beverage and the production of beer is reduced, for example allowing for producing beer and non-fermented beverage at different plants.

## Description

### Technical Field

The present disclosure generally relates to the field of beverage production, and in particular to resource-efficient production of beer and non-fermented beverage.

### Background Art

Plants for beer production come in many forms, ranging from small plants at craft breweries or microbreweries to plants that produce beer on an industrial scale. Brewing of beer comprises at least three main steps: mashing, lautering, and fermenting. Mashing is a process of mixing milled, usually malted, grain with water, and heating it with rests at controlled temperatures to allow enzymes to break down the starches in the grain into sugars such as maltose. The mashing results in a mash. Lautering is a process of separating the mash into a fermentable wort and retentate. Lautering may be achieved in a lauter tun or a mash filter. Fermentation begins when yeast is added to the wort. This is also the point at which the product is first called beer. During this stage, fermentable sugars in the wort are metabolized into alcohol and carbon dioxide.

The retentate from the lautering is a by-product of brewing and is also known as draff or brewer's spent grain. It is produced in large quantities in a beer production plant, for example 15 kg per 100 liter beer. The retentate is highly nutritious and contains proteins, fibers, and carbohydrates. At the same time, the retentate is rapidly degraded by microbiological activity and may be spoilt within hours after the lautering. At present, the retentate is used as animal feed or as raw material for production of biogas. It has also been proposed, for example in WO2019/023647, to process the retentate by drying and milling into a protein-rich flour. However, large quantities of retentate are discarded in today's plants for beer production.

### Summary

It is an objective to at least partly overcome one or more limitations of the prior art.

One such objective is to improve resource-efficiency in production of beer.

Another objective is to provide a technique of producing a non-fermented beverage in compliance with food safety regulations based on retentate from beer production.

A further objective is to provide such a technique that is simple to integrate with existing beer production and that allows flexibility in production.

One or more of these objectives, as well as further objectives that may appear from the description below, are at least partly achieved by a method of manufacturing a precursor liquid for use in production of a non-fermented beverage according to the independent claim, embodiments thereof being defined by the dependent claims.

A first aspect of the present disclosure is a method of manufacturing a precursor liquid for use in production of a non-fermented beverage. The method comprises: obtaining brewer's spent grain, BSG, from a process of producing beer; mixing the BSG with water into a slurry; processing the slurry for generation of the precursor liquid; and storing, during a storage time period, the precursor liquid for subsequent use as base material for production of the non-fermented beverage, wherein the storage time period exceeds 2 hours.

The method of the first aspect improves resource-efficiency in beer production by enabling production of a non-fermentable beverage by use of BSG, which is a by-product in beer production. The method is simple to integrate with existing beer production. By producing and storing a precursor liquid, the production of the non-fermentable beverage is rendered more independent of the production of beer, for example allowing for beer and non-fermented beverage to be produced at different plants, if the precursor liquid is manufactured at a beer production plant and transported, as part of the storage, from the beer production plant to another plant for production of the non-fermented beverage. The precursor liquid may be manufactured with a well-defined or standardized composition, and the same precursor liquid may subsequently be processed into different non-fermented beverages. It is also conceivable to manufacture precursor liquids with different well-defined compositions, which are tailored for use as base material in production of a respective set of non-fermented beverages.

In accordance the present description, some combinable embodiments of the first aspect are recited in the following.

In some embodiments, the method comprises performing a stabilization processing of at least one of the slurry or the precursor liquid to reduce its microbiological activity.

In some embodiments, the stabilization processing comprises at least one of heating, cooling or changing pH by acidification or alkalization.

In some embodiments, the storage time period for intermediate storage of the precursor liquid exceeds 8 hours.

In some embodiments, the storing of the precursor liquid comprises transporting the precursor liquid from a first plant for producing the beer to a second plant for producing the non-fermented beverage.

In some embodiments, the storing of the precursor liquid is performed so as to inactivate microbiological activity in the precursor liquid during the storage time period.

In some embodiments, processing the slurry comprises separating the slurry into a liquid component and a solid component, and forming the precursor liquid from the liquid component.

In some embodiments, the method comprises, before separating the slurry into the liquid component and the solid component, heating the slurry to a temperature of at least 100°C for a predefined time period.

In some embodiments, the method comprises, before separating the slurry into the liquid component and the solid component, processing the slurry to increase protein and/or dry matter content in the slurry.

In some embodiments, processing the slurry to increase protein and/or dry matter content comprises performing an enzymatic treatment of the slurry.

In some embodiments, performing the enzymatic treatment comprises performing at least one of a first enzymatic treatment comprising an enzymatic breakdown of fibers in the slurry, or a second enzymatic treatment comprising an enzymatic breakdown of proteins in the slurry.

In some embodiments, performing the enzymatic treatment comprises adding one or more enzymes to the slurry.

In some embodiments, each of the one or more enzymes is added in an amount of 0.5%-3% by weight of the slurry.

In some embodiments, the one or more enzymes comprises one or more carbohydrases and/or one or more proteases.

In some embodiments, the method comprises, before performing the enzymatic treatment, cooling the slurry to a temperature of less than 70°C.

In some embodiments, the method further comprises, subsequent to the enzymatic treatment, processing the slurry or the liquid component to deactivate enzymatic activity.

In some embodiments, the method further comprises processing the slurry to intermittently increase a pH of the slurry.

In some embodiments, the slurry is maintained at a temperature of at least 70°C until the slurry is separated into the liquid component and the solid component.

In some embodiments, the mixing of BSG with water is performed at a temperature above at least 70°C.

In some embodiments, the enzymatic treatment comprises, in sequence, heating the slurry to a temperature in a range of 40°C-70°C, adding one or more carbohydrases to the slurry, adjusting the pH of the slurry to a range of 7-11, and adding one or more proteases to the slurry, wherein the one or more carbohydrases are allowed to react with the slurry for a first treatment time period in a range of 0.5-12 hours, and the one or more proteases are allowed to react with the slurry for a second processing time period of no more than 2 hours.

In some embodiments, the one or more carbohydrases comprise a combination of cellulase and beta-glucanase.

In some embodiments, the one or more proteases comprise endo-protease.

In some embodiments, adjusting the pH comprises adding one or more alkali salts or alkaline solutions to the slurry.

In some embodiments, forming the precursor liquid comprises separating water from the liquid component to generate a concentrated liquid component.

In some embodiments, separating water comprises evaporating water from the liquid component and results in evaporated water, and the method further comprises supplying at least part of the evaporated water for mixing with the BSG to form the slurry.

In some embodiments, the mixing comprises operating a high-shear mixer on a mixture of water and BSG.

In some embodiments, the high-shear mixer is operated on the slurry for less than 60 minutes, and preferably for less than 45 or 30 minutes.

In some embodiments, the mixing comprises operating a plurality of mixing devices that are fluidly connected in series to sequentially process a mixture of water and BSG, wherein the plurality of mixing devices comprise at least one mill.

In some embodiments, the plurality of mixing devices comprise at least one colloid mill.

In some embodiments, the plurality of mixing devices comprise at least two colloid mills which are configured to yield different particle sizes.

In some embodiments, the plurality of mixing devices comprise a disc mill.

In some embodiments, the slurry is generated, by the mixing, with a D90 particle size of less than 1500 µm, and preferably less than 1200 µm or 1100 µm.

In some embodiments, the mixing is performed to achieve a total solids content of the slurry in a range of 8%-12% by weight.

Still other objectives and aspects as well as features, embodiments and technical advantages will appear from the following detailed description as well as from the drawings.

### Brief Description of the Drawings

Fig. 1 is a schematic block diagram of an example system for manufacturing of beer and non-fermented beverage.
Fig. 2 is an example method for manufacturing beer and non-fermented beverage from a grain material.
Fig. 3A is a flow chart of a procedure for manufacturing precursor liquid in the method of Fig. 2 in accordance with a first example, and Fig. 3B is a block diagram of a production line for manufacturing the precursor liquid in accordance with the first example.
Fig. 4A is a flow chart of a procedure for manufacturing the precursor liquid in the method of Fig. 2 in accordance with a second example, Fig. 4B is a block diagram of a production line for manufacturing the precursor liquid in accordance with the second example, and Fig. 4C is a plan view of an example yield enhancing station in the production line of Fig. 4B.
Fig. 5A is a flow chart of an example procedure for processing the precursor liquid into non-fermented beverage, and Fig. 5B is a block diagram of an example processing station for generating the non-fermented beverage in accordance with Fig. 5A.
Fig. 6 is a block diagram of an example mixing station in a production line for manufacturing a precursor liquid.
Fig. 7A is a block diagram of an example sub-system for water recovery in a production line for manufacturing precursor liquid, and Fig. 7B is a flow chart of an example method performed by the sub-system in Fig. 7A.

### Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "grain material" refers to any cereal or combination of cereals used or useful for production of beer. Cereals may be used for brewing beer either after being malted or as unmalted starch adjunct. Barley is the main raw material used for production of beer, but corn, rice, and wheat are also commonly used. Other examples of grain material include sorghum, millet, oats, rye, triticale, and fonio. As used herein, the term cereal also includes pseudo-cereals such as buckwheat.

As used herein, "beer" is a fermented beverage that is made from grain material. The beer may or may contain alcohol.

As used herein, "brewer's spent grain" or BSG is a by-product of the brewing industry and is also known as draff. BSG is obtained as a mostly solid residue from a mashing process, in which starch is turned into sugar during beer production. The composition of BSG may vary depending on the type of grain material used, the way it was grown, and other factors, but BSG is typically rich in cellulose, hemicelluloses, lignin, and protein. BSG is also naturally high in fiber.

As used herein, "slurry" refers to a mixture of solids denser than water suspended in liquid.

As used herein, a "precursor liquid" or PL is a liquid that is suitable for further processing into non-fermented beverage. The precursor liquid may also be denoted "base" or "base liquid". Typically, the precursor liquid lacks one or more properties that make it enjoyable for human consumption, for example in terms of taste and/or mouthfeel.

As used herein, a "non-fermented beverage" or NFB is a so-called ready-to-serve (RTS) type beverage that is produced without fermentation, whether achieved by addition of yeast or lactic acid bacteria. Specifically, the NFB is produced by further processing of the precursor liquid to make it enjoyable for human consumption, for example in terms of taste and/or mouthfeel. In some embodiments, the non-fermented beverage is produced without addition of alcohol and is thus non-alcoholic. In some embodiments, the non-fermented beverage is a plant milk. Plant milks are vegan beverages consumed as plant-based alternatives to dairy milk, and often provide a creamy mouthfeel. Plant milk is also known as alternative milk, mock milk, or vegan milk.

As used herein, a range that is defined to extend from a first value to a second value is intended to include the first and second values.

As used herein, "total solids" or TS is used in its ordinary meaning and is a measure of all the suspended, colloidal, and dissolved solids in a sample. The total solids content of a sample is typically determined as the amount of solids remaining after heating the sample at 105°C to constant weight.

As used herein, a "high-shear mixer" comprises to a mixing device, for example in form of a rotor, paddle, propeller, vane, turbine etc., such that the mixing device has a peripheral speed of at least 10 m/s, at least 15 m/s, or at least 20 m/s. The mixing device may in some implementations be surrounded by a stator for increasing the high shear mixing effect. The high-shear mixer is a batch mixer that is arranged in a vessel to process fluid material in batches, possibly with recirculation of the fluid material during mixing.

As used herein, a "disc mill" is used in its ordinary meaning and is also known as an attrition mill. A disc mill comprises opposing discs or plates which interact with the material to be milled. During milling, one disc is fixed and the other disc is rotating. In some implementations, the gap between the discs is adjustable. The discs may be grooved, serrated, or spiked. One of the discs may be perforated to transmit the comminuted material.

As used herein, a "colloid mill" is used in its ordinary meaning and comprises a static cone (stator) and a rapidly rotating cone (rotor), which form a gap in which fluid material is milled.

The present disclosure relates to production of non-fermented beverage, NFB, from BSG generated in beer production. The present Applicant has found that it would be advantageous make the production of NFB effectively independent of the production of beer. As will be described further below, the BSG obtained from beer production is highly susceptible to microbiological activity and may degrade significantly within a few hours of its production. One way to adhere to food and safety regulations for the NFB would be to integrate the production of beer and NFB in a common plant, so that NFB can be produced from BSG before the BSG is significantly degraded. It is also conceivable to process the BSG to mitigate its microbiological degradation, for example by heat treatment, to increase the useful life of the BSG. However, BSG is mainly made up of soaked grain material and has the consistency of a pulpy mass. In view of its consistency, it may be difficult and costly to sufficiently mitigate microbiological degradation throughout the BSG. Further, even if the useful life of the BSG is extended, it is both difficult and costly to transport the BSG between plants. One reason for the difficult logistics situation is that the BSG is not pumpable and needs to be handled by conveyors, carts, wheel loaders, dumpers or the like. It is also difficult to avoid contamination of the BSG, by contaminants or microorganisms, during transportation. Cleaning of the handling equipment and transportation vehicles may also be quite laborious and costly. The present Applicant has realized that these problems are overcome by separating the production of the NFB into production of a precursor liquid from BSG and production of NFB from the precursor liquid. The precursor liquid, being a liquid, is pumpable and as such easy to handle and transport under well-controlled conditions. It is also much easier to clean any equipment for handling and transportation of the precursor liquid compared to BSG.

Given this insight, the present Applicant has further realized that the production of NFB, whether made in the same plant as the beer production or in a separate plant, will be greatly facilitated by allowing for intermediate storage of the precursor liquid for at least a predefined minimum time period. The intermediate storage results in a reduced dependence between the NFB production and the beer production. In some embodiments, the storage time period is set to allow for the above-mentioned transport between different plants. In some embodiments, the storage time period is set to facilitate production within a single plant. It is currently believed that the storage time period should be at least 2 hours. In some embodiments, the storage time period is at least 4, 6 or 8 hours. In a preferred embodiment, the storage time period exceeds 8 hours. This provides great flexibility in transportation and/or production. It is currently believed that storage times in excess of 8 hours require one or more additional measures to be taken to preserve the quality of the precursor liquid and ensure that the resulting NFB meets food and safety regulations. One such measure may involve stabilization processing, as part of the production of the precursor liquid, to reduce or stop microbiological activity in the precursor liquid. Another such measure may involve performing the intermediate storage so that microbiological activity in the precursor liquid is inactivated or slowed down during the storage time period, for example by cooling the precursor liquid during the storage time period. It is to be understood that the above-mentioned measure(s) may be implemented also if the storage time period is less than 8 hours, to ensure the quality of the precursor liquid.

The content of the precursor liquid impacts the perceived quality of the NFB, for example in terms of taste and mouthfeel, as well as nutritional value. The precursor liquid may be seen to be composed of sugar (mono- and disaccharides), protein, total solids, moisture, and ash. It is currently deemed desirable to produce the precursor liquid with the following content, given by weight of precursor liquid: 0.5%-2% sugar, 0.7%-2% proteins, 4%-7% total solids, 93%-96% moisture, and 0.1 %-0.5% ash. This is the target composition of the precursor liquid in all embodiments and examples disclosed herein. The present Applicant currently believes that even better properties of the NFB is achieved by producing the precursor liquid with the following content: 1.0%-1.1% sugar, 0.9%-1.6% protein, 5% (±0.5%) total solids, 95% (±0.2%) moisture, and 0.3% (±0.05%) ash.

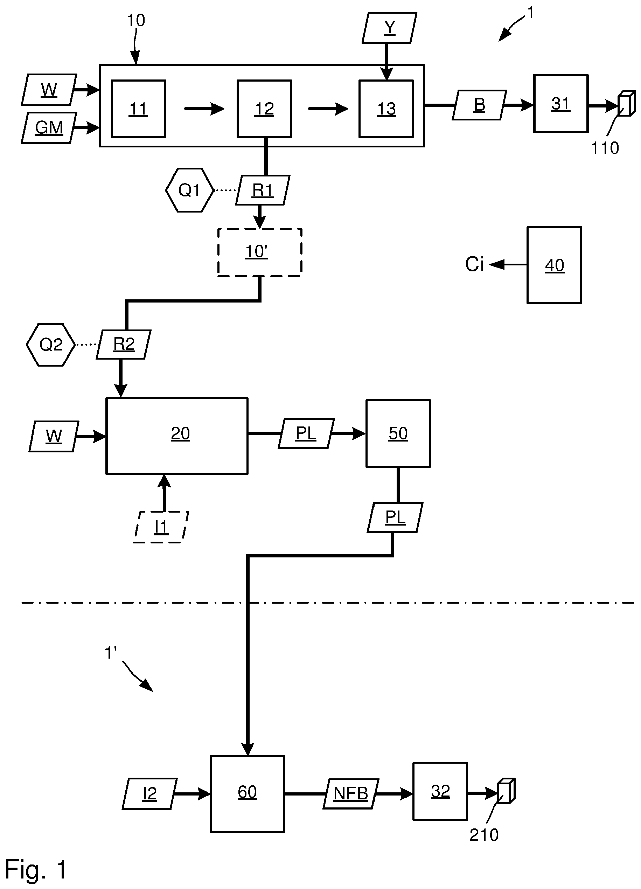

This novel principle of producing beer and NFB will be further explained and exemplified with reference to Fig. 1, which is a schematic block diagram of a system for combined production of beer and NFB. The system comprises a first sub-system 1 for production of beer, and a second sub-system 1' for production of non-fermented beverage, NFB. The first sub-system 1 comprises a production line 10 for beer, and a production line 20 for precursor liquid, PL. The production line 20 is configured to produce PL by use of a by-product from the production line 10. This by-product is produced as a retentate R1 from a filtration process in line 10. Specifically, the retentate R1 contains all solids that have been separated from wort by filtration. The retentate R1 mainly comprises pericarp and hull portions and other non-starchy portions of the grain material that is used as raw material for the beer production by line 10. The retentate R1 is commonly denoted brewer's spent grain, BSG.

The beer production line 10 is of conventional construction and is configured to process water W and grain material GM into beer B, by addition of yeast Y. In the illustrated example, the line 10 comprises a mashing station 11, a filtration station 12, and a fermentation station 13. The mashing station 11 is configured to receive the water W and the grain material GM, and optionally one or more further ingredients. The mashing station mixes the water and the grain material to form an enzyme-containing mash. The enzymes may originate from the grain material or be added separately to the mash. In the mashing station 11, the enzymes are allowed to break down starch into fermentable sugars, for example a mixture of glucose, maltose and maltotriose. The mash generated by the mashing station 11 is transferred to the filtration station 12, which is configured to separate the mash into a wort comprising the fermentable sugars, and spent grain, i.e. the above-mentioned retentate R1. The process of separating the spent grain from the wort is known as "wort separation", which may be performed by lautering, in which the grain bed itself serves as the filter medium, and/or by the use of filter frames.

The retentate R1 mainly comprises fibers, which are non-starch polysaccharides and significant quantities of proteins and lignin, with arabinoxylans (AX) typically constituting the most abundant component. Thus, R1 is basically a lignocellulosic material. Typically, about half of R1 comprises fibers on a dry weight basis. Up to about 30% of R1 on a dry weight basis may comprise proteins, for example hordeins, glutelins, globulins and albumins. Essential amino acids may represent approximately 30% of the total protein content, with lysine being the most abundant. Cellulose is typically an abundant polysaccharide in R1. Monosaccharides in R1 may include xylose, glucose, and arabinose. In addition, R1 may contain a variety of minerals, such as silicon, phosphorus, calcium, and magnesium.

The wort is transferred from the filtration station 12 to the fermentation station 13, in which fermentation is started by addition of yeast Y. In the fermentation station 13, the wort becomes beer in a process that may require a week to months depending on the type of yeast and strength of the beer. In addition to producing ethanol, fine particulate matter suspended in the wort settles during fermentation. Once fermentation is complete, beer B is output from the fermentation station 13. As shown in Fig. 1, the sub-system 1 may comprise a beer packaging station 31, which is arranged to receive the beer B from the production line 10 and fill the beer into first containers 110. The first containers 110 may be configured for batch distribution (for example, casks or kegs) or for direct consumption (for example, cans or bottles). Although not shown in Fig. 1, the sub-system 1 may comprise dedicated storage tanks for storing beer in preparation of packaging.

It should be understood that the beer production line 10 in Fig. 1 is merely given as a non-limiting example. The stations 11-13 may be configured to perform additional processing and/or the line 10 may include additional stations for such additional processing, for example flavoring of the wort, heating of the wort, cooling of the wort, filtration of the beer, maturation of the beer, etc. The sub-system 1 may comprise more than one beer production line 10 and such production lines 10 may share equipment.

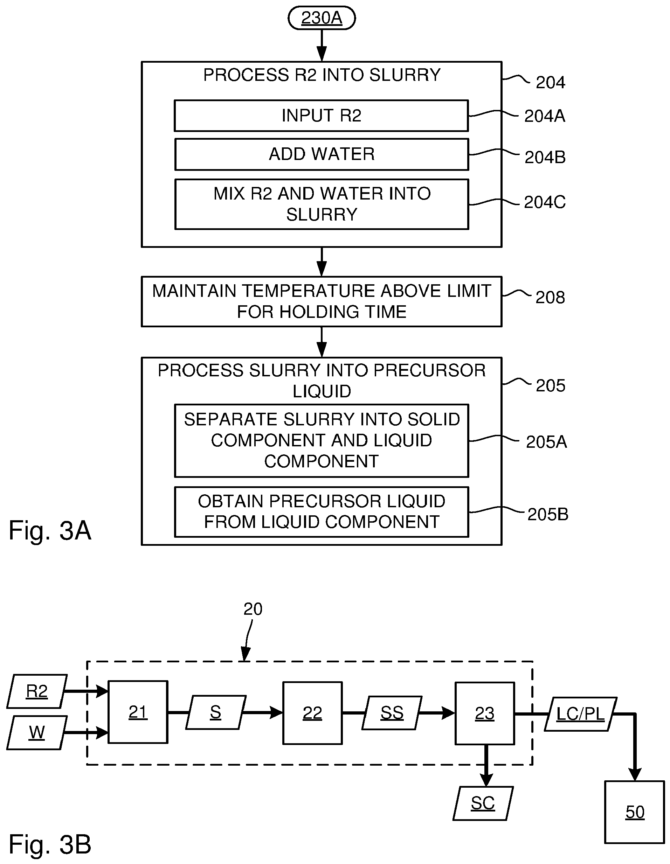

The PL production line 20 is configured to process water W and retentate material R2 into precursor liquid, PL, optionally comprising addition of one or more further ingredients 11, for example one or more enzymes to increase the content of protein and/or dry matter in the PL. The retentate material R2 comprises at least part of the retentate R1 from the beer production line 10, subject to one or more constraints, as will be described further below. Herein, R2 is also BSG. The sub-system 1 may comprise more than one PL production line 20 and such production lines 20 may share equipment. Example configurations of the PL production line 20 are presented further below with reference to Fig. 3B, Figs 4B-4C, Fig. 6 and Fig. 7A.

The sub-system 1 further comprises a control system 40, which is configured to generate control signals Ci for equipment within the sub-system 1, including equipment in the production lines 10, 20. For example, the control system 40 may control various process parameters within the respective line, such as degree of mixing, residence time, temperature, pressure, addition of ingredients, etc. However, at least some of the processing steps to produce beer and PL, respectively, may be manually performed and/or controlled by an operator.

The retentate R1 is produced in large quantities by the beer production line 10. Typically, about 100-130 kg of retentate R1 is obtained from 100 kg of grain material, equating to about 15-20 kg retentate per hectoliter beer. Properties of R1 are represented by Q1 in Fig. 1. It is to be noted that R1 refers to the retentate directly after its production by line 10. The main component in R1 is water, which is mainly contained within the spent grains in R1. Generally, the relative water content in R1 is in the range of 60%-90%, corresponding to total solids (TS) in the range of 10%-40%. In practice, the relative water content in R1 is often in the range of 70%-85%, corresponding to TS in the range of 15%-30%. R1 is produced with a temperature in the range of 55°C-90°C. This refers to the average temperature of R1, given that there may be temperature variations within a batch of retentate produced by line 10. In practice, the temperature of R1 is typically above 65°C or above 70°C, and preferably below 85°C or below 80°C. The rich polysaccharide and protein content and the high moisture content of R1, and its temperature, make R1 susceptible to microbial growth and spoilage. Thus, while R1 may be microbiologically stable and within acceptable limits for food use when produced by the line 10, proliferation of microaerophilic bacteria and anaerobes make the microflora in R1 prone to rapid change. Since the NFB is intended for human consumption, it is imperative that the retentate material R2 complies with food safety regulations, which include limitations on the presence of bacteria and toxins. The sub-system 1 in Fig. 1 facilitates compliance with such regulations since the PL production line 20 is located in the same physical facility as the beer production line 10. Specifically, the time from output of R1 from line 10 to input of R2 to line 20 may be limited.

It is to be noted that line 10 produces R1 in batches, while line 20 may or may not consume R2 in batches. Depending on the respective capacity of the lines 10, 20, R2 may comprise all of R1, or only a portion thereof.

In Fig. 1, block 10' represents optional equipment in the sub-system 1 for transferring, storing, or processing R1. In some embodiments, block 10' comprises a fixed installation for transferring at least part of R1 from line 10 to line 20. Such a fixed installation may include one or more screw conveyors, piping, etc. The fixed installation may also comprise a diversion mechanism, which is configured to ensure that the required amount of R2 is received at line 20 by diverting part of R1, for example to a separate storage (not shown) or to another production line (not shown) for producing PL or another product based on the thus-diverted R1. However, in some embodiments, the transfer of retentate from line 10 to line 20 may be performed without a fixed installation, for example by carts or trays on wheels, which may or may not be motorized. In some embodiments, block 10' comprises an intermediate storage for storing retentate. In some embodiments, the block 10' comprises equipment for stabilizing the retentate by reducing its microbiological activity. Such stabilization may be achieved by one or more of heating the retentate, cooling the retentate, drying the retentate, or changing the pH of the retentate by acidification or alkalization.

In some embodiments, such stabilization is omitted. Thus, R2 is produced without any active processing of R1 for modification of its properties. As used herein, "active processing" implies a supply of energy and/or one or more substances. By obviating active processing, the construction and operation of the sub-system 1 may be simplified and the cost of production may be kept down. The lower cost of production is not only due to lower consumption of energy and/or substance(s), but also a reduced need for cleaning and maintenance of the stabilization equipment.

The second sub-system 1' is configured to produce non-fermented beverage, NFB, from the precursor liquid, PL, that is manufactured by the first sub-system 1'. The second sub-system 1' comprises a processing station 60, which is configured process PL into NFB by addition of more or more ingredients I2. The processing of PL into NFB is also denoted "final formulation" herein. The ingredient(s) I2 may comprise any of vegetable oil, flavoring, sweetener, salt, thickener, stabilizer, vitamin, or mineral. As shown in Fig. 1, the sub-system 1' may further comprise an NFB packaging station 32, which is arranged to receive the NFB from the processing station 60 and fill the NFB into second containers 210. The second containers 210 may or may not be aseptic or semi-aseptic. The second containers 210 may be configured for batch distribution or for direct consumption. In some embodiments, the second containers 210 are consumer packages of any type, including but not limited to bottles of glass or plastic, metal cans, or carton-based packages, which may be sealed for subsequent distribution. Although not shown in Fig. 1, the sub-system 1' may comprise dedicated storage tanks for storing NFB in preparation of packaging.

Although not shown in Fig. 1, the second sub-system 1' may comprise a control system, which may be similar to or part of the control system 40 and configured to generate control signals for equipment within the sub-system 1', including the processing station 60.

As seen in Fig. 1, the system 1 further includes a storage 50 for the precursor liquid, PL, that is generated by the production line 20. The storage 50 is configured for the above-mentioned intermediate storage of the precursor liquid. The storage 50 may include one or more containers, vessels, tanks, etc., which may be stationary or moveable. As noted above, the intermediate storage may involve transportation from a first plant containing sub-system 1 to a second plant containing sub-system 1'. The first and second plants may be separated by a considerable distance, for example 10-500 km. The transportation may be performed by a cargo transport unit such as a road freight vehicle, a railway freight wagon, a freight container, a road tank vehicle, a railway wagon, a portable tank, or any other conventional unit for transportation of liquids. Alternatively, the sub-systems 1, 1' may be located in a common plant, and the precursor liquid is pumped into the storage 50 after production by sub-system 1, and is pumped out of the storage 50 as needed by the sub-system 1' in the production of NFB.

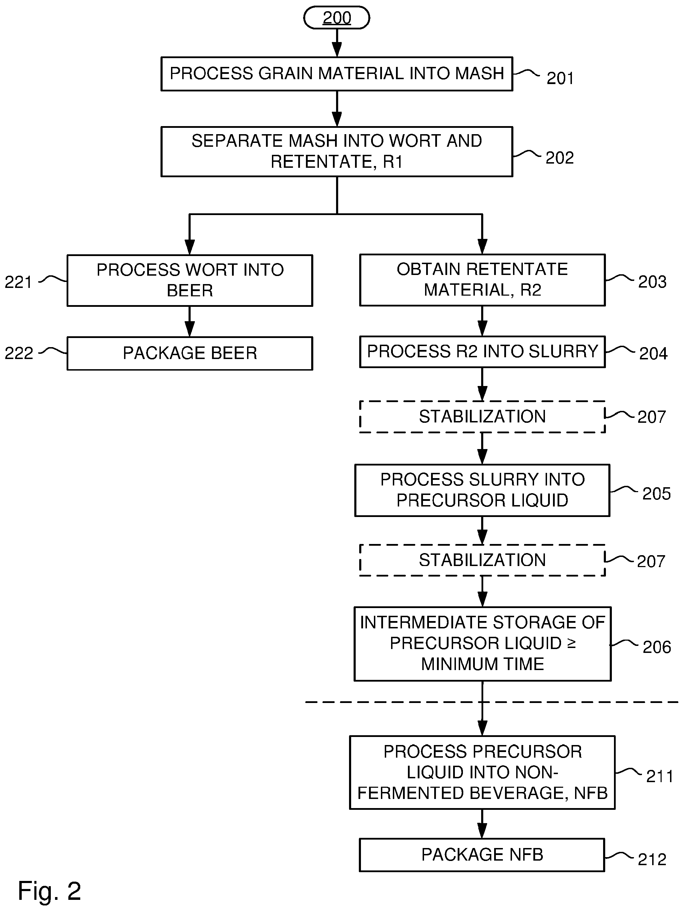

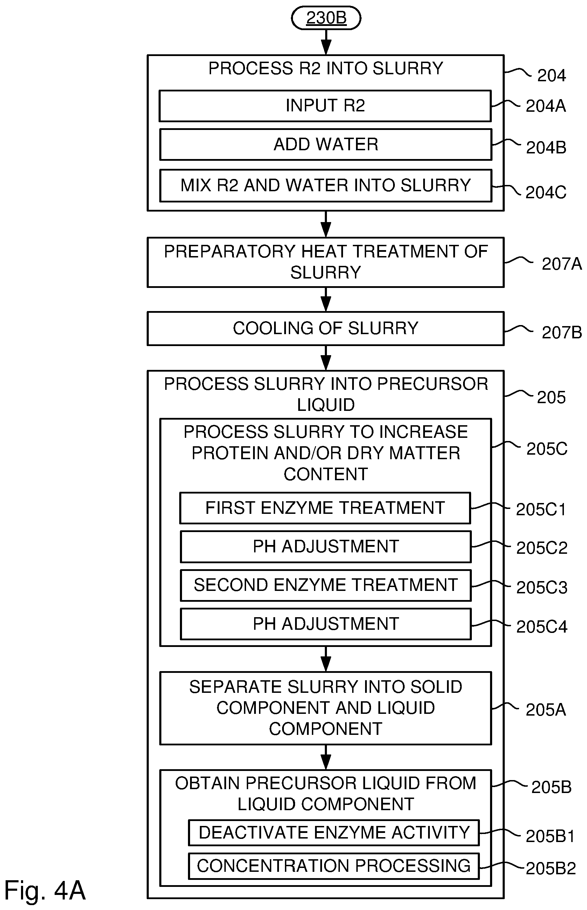

Fig. 2 is a flow chart of an example method 200 for production of beer and NFB. By way of example, the method 200 will be described with reference to the system in Fig. 1. In step 201, grain material is processed into a mash by sub-system 1, for example in the mashing station 11. In step 202, the mash is separated into a fermentable wort and a retentate by sub-system 1, for example in the filtration station 12. Step 202 thereby produces R1. In step 203, R2 is obtained by the production line 20. In step 204, R2 is processed into a slurry. As described above, R2 comprises at least a portion of R1. In step 205, the slurry is processed into a precursor liquid, PL, for example in accordance with example procedures described below with reference to Fig. 3A and Fig. 4A. In step 206, the precursor liquid is pumped into a storage, for example the storage 50 in Fig. 1, for intermediate storage during at least a predefined minimum time period. In the example of Fig. 1, steps 204-206 are performed by the production line 20.

As indicated by dashed boxes, the method 200 may further comprise at least one stabilization step 207 to reduce microbiological activity. The stabilization step 207 may be particularly relevant if R2 is obtained without stabilization processing of R1. However, experiments indicate that the stabilization step 207 may be relevant also if the BSG is processed for stabilization. In one example, as shown in Fig. 2, the slurry is subjected to stabilization processing to reduce its microbiological activity. In another example, as also shown in Fig. 2, the precursor liquid is subjected to stabilization processing to reduce its microbiological activity. In yet another example, not shown, stabilization processing is performed as part of step 205, for example by processing the liquid component that is extracted from the slurry (below). Depending on implementation, the stabilization processing may involve heating, cooling, or modifying pH by acidification or alkalization, or any combination thereof. In a preferred embodiment, the stabilization processing is performed by heating, also known as thermal treatment. Thermal treatment is more effective in eliminating microorganisms compared to cooling and pH modification. Further, compared to pH modification, thermal treatment results in minimum change in properties of the material that undergoes stabilization processing.

For example, the thermal treatment may involve one or more of heating to 60°C-70°C for 10-15 seconds (thermization), heating to 72°C-110°C for 15-120 seconds (pasteurization), heating to 120°C-130°C for 15-120 seconds (high heat pasteurization) or heating to 137°C-145°C for 4-16 seconds (Ultra High Temperature heat treatment, or sterilization). The thermal treatment may be adjusted based on the microbial load of R2 and/or the intended duration of the intermediate storage of the precursor liquid (step 206). The thermal treatment may be performed by direct heating, for example injection of steam, or by indirect heating, for example in one or more heat exchangers, or a combination thereof.

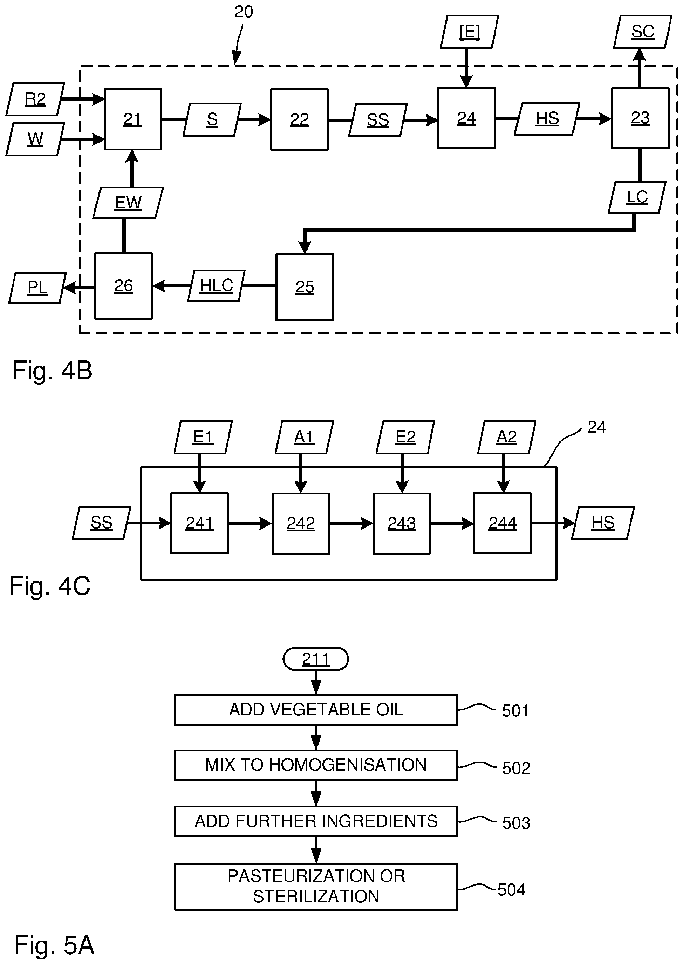

As indicated by a dashed horizontal line in Figs 1-2, the production of the NFB is separated from the processing of the retentate material R2 by the intermediate storage of the precursor liquid. In Fig. 2, the method 200 comprises a step 211 of processing the precursor liquid into the NFB by sub-system 1', for example the processing station 60 in Fig. 1. Step 211 may be performed in accordance with conventional practice, for example as used in production of conventional plant-based milk, to obtain a desired taste and/or mouthfeel of NFB. An example of step 211 is presented further below with reference to Fig. 5A. In step 212, the NFB is output and packaged, for example in the packaging station 32.

The method 200 also comprises a step 221 of processing the fermentable wort into beer in sub-system 1, for example in the fermentation station 13. Step 221 may be performed in accordance with any conventional procedure and is started by addition of yeast to the wort. In step 222, the beer is output and packaged, for example in the packaging station 31.

Fig. 3A is a flow chart of a first example procedure 230A for producing precursor liquid, PL, for example as part of the method 200 in Fig. 2. The procedure 230A provides a simple yet effective technique of producing PL from retentate material, R2. The procedure 230A may be performed by the production line 20 in Fig. 1 and comprises steps 204, 208 and 205, which are performed in sequence. In Fig. 3A, the step 204 of processing R2 into a slurry comprises inputting R2 (step 204A), adding water (step 204B) and mixing R2 and water into the slurry (step 204C). Steps 204A-204C may be performed in a mixing arrangement, for example a tank with an integrated or attached mixing device, such as a recirculation system and/or a rotor or impeller. In some embodiments, the mixing arrangement comprises a heating device for heating the contents of the tank, for example by direct injection of steam or by circulating a heating medium in a jacket on the tank, as is well known in the art. As understood from the foregoing, R2 contains particles that are generated when the grain material is processed into a mash in step 201 (Fig. 2). The mixing in step 204C will cut these particles into smaller particles that are suspended in the water added in step 204B. The amount water added in step 204B depends on the desired TS of PL as well as the TS of R2. In a non-limiting example, the TS of the slurry may be in the range of 4%-15% by weight. In a preferred embodiment, the TS of the slurry is in the range of 8%-12% by weight. In this range the slurry has a sufficiently low viscosity to make it easily pumpable and the TS enables the subsequent PL to be used in production of NFB with desirable properties. Steps 204A-204C may be performed in different order. For example, water may be added before R2. Further, R2 and water may be added in batches, and the mixing may be performed for each batch.

The addition of water by step 204B has significant advantages. The slurry becomes pumpable, which facilitates subsequent processing. Further, the slurry may be heated by use of one or more heat exchangers and may be pumped into in tanks for storage and/or further processing. It has been proposed to extract liquid from BSG by pressing, similar to pressing of grapes for wine production. However, since much of the water in BSG is bound, only a fraction of the water can be extracted by pressing. Internal trials indicate that from 60 kg of BSG, approximately 30 liters of liquid can be extracted by pressing. By comparison, approximately 900 liters of PL may be produced from the same amount of BSG by generating a slurry in accordance with step 204.

In some embodiments, the water added in step 204B has a temperature above at least 70°C, and preferably above at least 75°C or at least 80°C. This will mitigate growth of microorganisms in the slurry.

In some embodiments, the mixing in step 204C is performed at a temperature above or equal to a minimum temperature, which may be 70°C, and preferably 75°C or 80°C. Further, the temperature during the mixing may be equal to less than a maximum temperature, which may be 100°C. In accordance with these embodiments, the temperature in the mixture of R2 and water is thus maintained in the temperature range defined by the minimum and maximum temperatures throughout the mixing step. Apart from mitigating growth of microorganisms, the elevated temperature will lower the viscosity of the mixture.

In some embodiments, as indicated by step 208 in Fig. 3A, the slurry is maintained in the above-mentioned temperature range for a holding time, after mixing, for example to ensure a correct yield of proteins in the slurry. In a non-limiting example, the holding time may be in the range of 1-60 minutes. The longer the holding time, the more important it is to maintain the temperature to counteract microbiological activity in the slurry. Step 208 may be performed in the mixing arrangement, in a dedicated storage tank, or during transfer in preparation of step 205.

In a preferred embodiment, the heating according to steps 204 and 208 results in the above-mentioned stabilization of the slurry. Step 207 in Fig. 2 is thus jointly implemented by steps 204 and 208.

In a variant, not shown, step 204 is performed without heating of the slurry, and a dedicated stabilization step 207 is performed intermediate steps 204 and 205 to stabilize the slurry, for example by thermal treatment. In a further variant, the stabilization step is instead performed during or subsequent to step 205, for example as described with reference to Fig. 2.

Like in Fig. 2, the method 230A comprises a step 205 of processing the slurry into precursor liquid, PL. In the illustrated example, step 205 comprises a step 205A of separating the slurry into a solid component and a liquid component, and a step 205B of obtaining the precursor liquid from the liquid component. The separation in step 205A will remove solids larger than a minimum size from the slurry. Such solids form a sludge that comprises husks, fibers, and other solid particles. The solid component is typically discarded. In a non-limiting example, the minimum size is in the range of 50-500 µm, for example about 100 µm. In some embodiments, the temperature is maintained in the above-mentioned temperature range also during step 205A. Step 205A may be performed in any type of filtration or separation arrangement, for example a decanter.

Step 205B may or may not involve further processing of the liquid component to form the precursor liquid. In a simple embodiment, the precursor liquid is obtained by receiving the liquid component from the filtration/separation arrangement that performs step 205A. Alternatively, the liquid component may be processed in step 205B to stop an ongoing hydrolyzation process, which has been previously initiated by addition of one or more enzymes to the slurry (cf. step 205C in Fig. 4A). Alternatively or additionally, the liquid component may be subjected to concentration processing in step 205B to decrease its water content. Step 205B will be further exemplified below with reference to Fig. 4A.

Fig. 3B is a block diagram of an example production line 20 which is configured to manufacture precursor liquid in accordance with an embodiment. The production line 20 comprises a mixing station 21, which is configured to perform step 204. The mixing station 21 may comprise a mixing arrangement as described hereinabove. The mixing station is arranged to receive R2 and water W and output a slurry S. A stabilization station 22 is configured to perform a thermal treatment corresponding to step 207 (Fig. 2) and output a stabilized slurry SS. A separation station 23 is arranged to receive the stabilized slurry SS and configured to perform step 205A. The separation station 23 may comprise one or more decanters. By the separation station 23, the slurry SS is separated into the liquid component LC and the solid component SC. In the illustrated example, the liquid component LC forms the precursor liquid PL and is pumped into the storage 50 for intermediate storage. The solid component SC is discarded. The stabilization station 22 may also or alternatively be operated to perform step 208 (Fig. 3A) of maintaining the slurry at a temperature in the above-mentioned temperature range. Alternatively, the station 22 may be omitted and the stabilization step 207 may be performed in the mixing station 21.

Fig. 4A is a flow chart of a second example procedure 230B for producing precursor liquid, PL, for example as part of the method 200 in Fig. 2. The procedure 230B may be performed by the production line 20 in Fig. 1 and comprises steps 204, 207A, 207B, and 205, which are performed in sequence. Compared to the procedure 230A, the procedure 230B provides a more advanced technique of producing PL from R2, by including a step dedicated to increasing the protein and/or dry matter content in the PL by enzymatic treatment. The procedure 230B starts by a step 204 of processing R2 into a slurry. Step 204 may be the same as in the procedure 230A (Fig. 3A). Step 204 is followed by stabilization processing by steps 207A, 207B. In step 207A, the slurry is subjected to a thermal treatment. The purpose of step 207A is to kill bacteria, viruses, and possibly spores that may be present in the slurry. Step 207A is performed to prepare the slurry for the subsequent enzymatic treatment, in which the slurry is held at lower temperature for an extended time period. In the absence of the heat treatment by step 207A, microorganisms may proliferate during the enzymatic treatment and spoil the resulting PL. In some embodiments, step 207A is performed in a closed heating vessel, under pressurized conditions, similar to the processing in an autoclave. In step 207B, the slurry is cooled to an operating temperature for the enzymatic treatment. Depending on the enzyme(s) used, the operating temperature may be in the range of 40°C-95°C. In one example, the operating temperature is below 70°C. In some embodiments, step 207A and/or step 207B is omitted.

In a non-limiting example of step 207A, the slurry is heated by a combination of indirect and direct heating. For example, the slurry may be pumped through a heat exchanger (HE), for example a tubular HE or a plate HE, in which the slurry is heated to 60°C-90°C. The incoming slurry may have a temperature in the range of 4°C-70°C. Then, the slurry is further heated by injection of steam, for example in a dedicated vessel. Thereby, the temperature of the slurry may be increased to 137°C-145°C. The injected steam is of culinary quality. Then, in step 207B, the slurry may be passed through a vacuum chamber to achieve evaporative cooling of the slurry to 60°C-90°C. The level of vacuum in the chamber may be adjusted based on the final temperature to be achieved. The slurry may then be further cooled to about 20°C-30°C in a heat exchanger, HX (tubular or plate).

In another non-limiting example of step 207A, the slurry is heated by indirect heating. For example, the slurry is pre-heated from to 60°C-90°C in a first section of an HX (tubular or plate), and then further heated to a target temperature of 137°C-145°C in another section of the HX. The slurry is maintained under pressure to avoid flashing off and is held at the target temperature for 4-16 seconds. Then, in step 207B, the slurry may be transferred to another HX (tubular or plate) in which it is cooled is a first section to 60°-90°C and then to about 20°C-30°C in a second section.

The step 205 of processing the slurry into the precursor liquid comprises a step 205C of processing the slurry to increase its content of protein and/or dry matter. Specifically, step 205C comprises performing an enzymatic treatment of the slurry. In the context of the present disclosure, the enzymatic treatment is also denoted "hydrolysis" or "hydrolyzation process". The enzymatic treatment comprises adding one or more enzymes to the slurry, mixing the respective enzyme with the slurry, and allowing the respective enzyme to break down components of the slurry for a predefined treatment time period. It is currently believed that an effective enzymatic treatment is achieved by adding the respective enzyme in an amount of 0.5%-3% by weight of the slurry. The mixture of slurry and enzymes may or may not be mixed during the treatment time period. Control parameters of the enzymatic treatment, such as temperature, pH, and treatment time, are adapted to the respective enzyme. The present Applicant has found that it may be advantageous to include at least one of a first enzymatic treatment comprising an enzymatic breakdown of fibers in the slurry, or a second enzymatic treatment comprising an enzymatic breakdown of proteins in the slurry. The first enzymatic treatment may comprise addition of one or more carbohydrases to the slurry. Examples of suitable carbohydrases include arabanase, cellulase, beta-glucanase, hemi-cellulase, or xylanase. The second enzymatic treatment may comprise addition of one or more proteases to the slurry. Examples of suitable proteases include endo-proteases. The present Applicant has surprisingly found that combining the first and second enzymatic treatments has the ability of significantly increasing the yield of protein and/or dry matter in the PL. The first enzymatic treatment has the ability to break down fibers in the slurry, resulting in proteins and other compounds, and the second enzymatic treatment has the ability to break down proteins into smaller polypeptides or single aminoacids. Thereby, the first enzymatic treatment is capable of enhancing the yield of the second enzymatic treatment.

In Fig. 4A, step 205C comprises such a combined enzymatic treatment, which may be performed in one or more tanks, which may or may not include one or more mixing devices. The first enzymatic treatment 205C1 is initiated to be performed for a first treatment time period ("first time period"). Step 205C1 is followed by a step 205C2 of adjusting the pH for the second enzymatic treatment. Generally, proteases may operate better at a higher pH than carbohydrases. Thus, step 205C2 may be performed to increase the pH of the slurry, for example by addition of an alkali salt or alkaline solution to the slurry. Examples of alkali salts include sodium hydroxide, disodium phosphate, sodium bicarbonate, etc. When the pH has been adjusted by step 205C2, the second enzymatic treatment 205C3 is initiated to be performed for a second treatment time period ("second time period"). The first enzymatic treatment continues during the second time period, and the second time period is thus inherently shorter than the first time period. Depending on implementation, step 205C3 may be followed by a further pH adjustment, in step 205C4, for example to lower the pH by addition of acid or acid salt.

After significant experimentation, the present Applicant has identified a plurality of operational settings for the enzymatic treatment that result in desirable properties of the PL, for example in terms of its content of protein and/or dry matter. One operational setting is to add a combination of at least one cellulase and at least one beta-glucanase in step 205C1. Experiments have been performed by use of the cellulase Celluclast^{®} and the beta-glucanase Ultraflo^{®} XL provided by Novozymes. Another operational setting is to add at least one endo-protease in step 205C3. Experiments have been performed by use of each of the endo-proteases Neutrase^{®}, Alcalase^{®} and Protamex^{®} provided by Novozymes. Another operational setting is to ensure that the slurry has a temperature in the range 30°C-80°C at the start of the enzymatic treatment in step 205C. Experiments indicate improved performance when the slurry temperature is maintained in the range 40°C-70°C during the enzymatic treatment, and even more so when the slurry temperature is maintained in the range 50°C-60°C. A currently preferred slurry temperature during the enzymatic treatment is 55°C (±2°C). Another operational setting is to use a first time period in the range 0.5h-24h. Experiments indicate improved performance when the first time period is in the range 0.5h-12h, and even more so when the first time period is in the range 1h-4h. A currently preferred first time period is 2h (±0.5h). Another operational settings is to adjust the pH of the slurry by step 205C2 to the range 6-12. Experiments indicate improved performance when the adjusted pH is in the range 7-11, and even more so when the adjusted pH is in the range 8-10. A currently preferred adjusted pH is 8 (±0.2). Another operational setting is to use a second time period that is less than or equal to 3h. If the second time period is too long, the protease may produce bitter peptides, which reduce the utility of the precursor liquid. Experiments indicate improved performance when the second time period is less than or equal to 2h, and even more so when the second time period is less than or equal to 1h. A currently preferred second time period is 45 min (±5 min).

The effectiveness of enzymatic treatment is illustrated in Table 1, which compares properties of a precursor liquid obtained in experiments involving three different types of processing: no enzymatic treatment, first enzymatic treatment (endo-protease only), and a combination of first and second enzymatic treatments (cellulase, beta-glucanase and endo-protease). The slurry had the same properties at the start of all experiments, except for pH which was set according to Table 1. The use of enzymatic treatment is seen to increase both TS and protein content in the slurry. Further, by using a combination of carbohydrases and protease, the protein content in the slurry is significantly increased even further. Although not shown in Table 1, the second enzymatic treatment (one or more carbohydrases and no protease) has also been found to increase both TS and protein content in the slurry compared to processing without enzymatic treatment.

**Table 1:**

| Enzymatic treatment | pH | TS (%) | Protein (%) |
|---|---|---|---|
| None | 6 | 4 | 0.3 |
| Protease | 7.9 | 5 | 0.6 |
| Carbohydrase + Protease | 7.6 | 5 | 0.85 |

Reverting to Fig. 4A, step 205C is followed by the step 205A of separating the liquid component from the slurry. Step 205A may be the same as in the procedure 230A (Fig. 3A). Step 205A is followed by the step 205B of obtaining the precursor liquid from the liquid component. As shown, step 205B may comprise a step 205B1 of deactivating the enzymes that were added to the slurry in step 205C. Step 205B1 is performed to define the first and second time periods, i.e. to end the activity of the respective enzyme. Step 205B1 may be performed by heating the liquid component and holding the heated liquid component for a predefined time period, for example in the range of 10-600 seconds. For example, step 205B1 may comprise heating the liquid component to at least 80°C, or at least 85°C, but not more than about 115°C. The heating may be performed in one or more heat exchangers. Alternatively or additionally, step 205B1 may comprise cooling the liquid component to deactivate the enzymes. For example, step 205B1 may comprise cooling the liquid component to below 10°C, and preferably below 5°C, but above 0°C, for example in the range 3°C-5°C. The cooling may be performed in one or more heat exchangers. In a variant, step 205B1 is performed before step 205A and is thus operated on the slurry instead of the liquid component. In some embodiments, step 205B1 is omitted.

In Fig. 4A, concentration processing of the liquid component is performed in step 205B2 subsequent to the deactivation step 205B1 (if performed). The concentration processing removes water from the liquid component to increase its concentration. The concentration processing is particularly advantageous when the precursor liquid is to be transported between plants, since it reduces both volume and weight of the precursor liquid that is transported and thereby decreases the environmental impact of the transportation. The concentration processing may be performed by any technique for removing water from a liquid, including but not limited to evaporation and filtration.

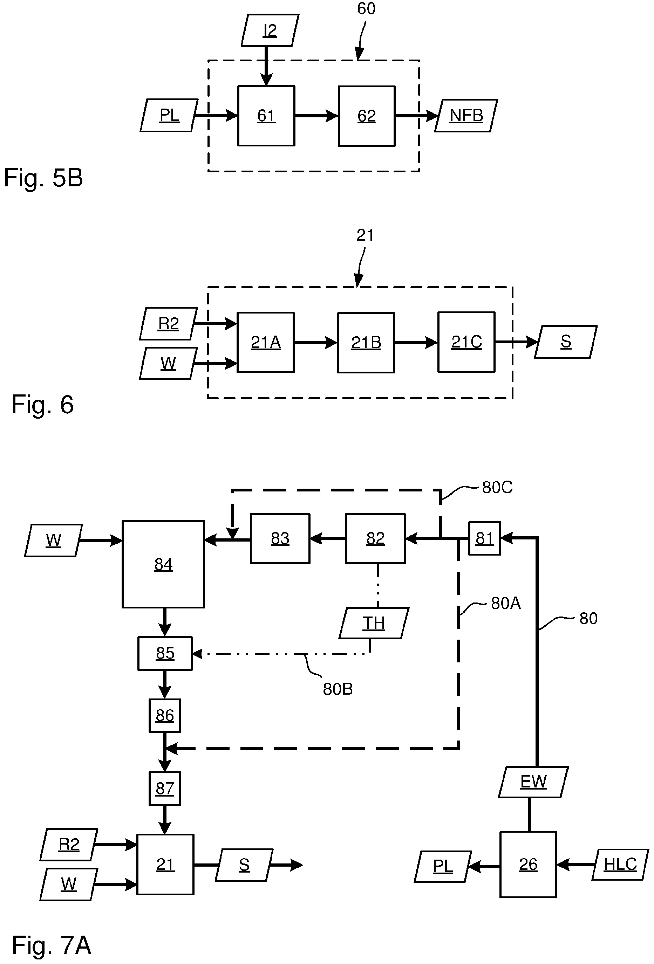

Fig. 4B is a block diagram of an example production line 20 in accordance with an embodiment. The production line 20 comprises a mixing station 21, which may be the same as in Fig. 3B. The mixing station 21 is arranged to receive R2 and water W and output a slurry S. A stabilization station 22 is configured to perform a thermal treatment corresponding to step 207A-207B and output a stabilized slurry SS. In a variant, the station 22 is omitted and the thermal treatment is performed in the mixing station 21. A hydrolyzation station 24 is arranged to receive the stabilized slurry SS. The hydrolyzation station 24 is configured to initiate the enzymatic treatment of step 205C, by addition of one or more enzymes [E]. In some embodiments, the hydrolyzation station 24 may be configured to perform steps 205C1-205C4 as described hereinabove. The hydrolyzation station 24 may comprise one or more tanks, which may or may not include one or more mixing devices. The hydrolyzation station 24 outputs a hydrolyzing slurry HS, i.e. a slurry that undergoes hydrolyzation. A separation station 23 is arranged to receive the hydrolyzing slurry HS and configured to perform step 205A. The separation station 23 may be the same as in Fig. 3B. By the separation station 23, the slurry HS is separated into the liquid component LC and the solid component SC. A deactivation station 25 is arranged to receive the liquid component LC from the separation station 23 and configured to process the liquid component LC to deactivate enzymatic activity, in accordance with step 205B1. The deactivation station 25 outputs a hydrolyzed liquid component HLC. A concentration station 26 is arranged to receive HLC from the deactivation station 25 and configured to remove water from HLC, in accordance with step 205B2, resulting in the precursor liquid, PL. The concentration processing results in extracted water EW, which is removed from HLC. In some embodiments, as indicated in Fig. 4B, the concentration station 26 is fluidly connected to supply all or part of EW to the mixing station 21 for use in producing the slurry S. This water recirculation reduces the consumption of water by the production line 20. Examples of the water recirculation are given below with reference to Figs 7A-7B.

In the example of Fig. 4B, the first and second time periods for the enzymatic treatment include the residence time of the respective enzyme in the slurry within the hydrolyzation station 24, the time for pumping the slurry from the hydrolyzation station 24 to the separation station 23, the time for producing the liquid component from the slurry, and the time for pumping the liquid component to the deactivation station 25. The skilled person understands that the production line 20 may be designed to achieve a transfer of fluid through the stations 24, 23 and 25 in Fig. 4B that is consistent and meets operational settings for the first and second time periods. This may be achieved by either batch processing or continuous processing in the respective station.

Fig. 4B is merely given as an example. In an alternative, the pH adjustment according to step 205B4 is performed by the deactivation station 25. In another alternative, the deactivation station 25 is arranged intermediate the hydrolyzation station 24 and the separation station 23. Such an arrangement of the deactivation station 25 may make it easier to control the first and second time periods. However, the complexity of the deactivation station 25 may be reduced if it is arranged downstream of the separation station 23, as in Fig. 4B, since the volume of fluid to be deactivated is reduced. Further, the liquid component LC has a significantly lower viscosity than the slurry, which increases the available heat exchangers for use in deactivation by heating or cooling. In some installations, the deactivation station 25 or the concentration station 26, or both, may be omitted.

Fig. 4C is a block diagram of an example hydrolyzation station 24, which may be included in the production line 20 of Fig. 4B. A first sub-station 241 is arranged to receive the stabilized slurry SS and configured to perform the first enzymatic treatment in accordance with step 205C1, by addition of one or more first enzymes E1. A second sub-station 242 is arranged to receive the slurry from sub-station 241 and configured to adjust pH in accordance with step 205C2, for example by addition of one or more alkali salts or alkaline solutions A1. A third sub-station 243 is arranged to receive the slurry from sub-station 242 and configured to perform the second enzymatic treatment in accordance with step 205C3, by addition of one or more second enzymes E2. A fourth sub-station 243 is arranged to receive the slurry from sub-station 243 and configured to adjust pH in accordance with step 205C4, for example by addition of one or more acids or acid salts A2. It should be noted that the separation into sub-stations 241-244 is optional. It is conceivable that two or more of steps 205C1-205C4 are performed by the same equipment, by sequential addition of ingredients E1, A1, E2 and A2.

Fig. 5A is a flow chart of a procedure that may be part of step 211 in the method 200 of Fig. 2, in which the precursor liquid is processed into NFB ("final formulation"). In step 501, a vegetable oil is added to the precursor liquid. The addition of vegetable oil will at least partly shape the consistency of the NFB, for example to achieve a desired mouthfeel. The amount of vegetable oil depends on recipe but may be in the range of 0.1%-5% by volume of the NFB. In step 502, the vegetable oil is mixed with the liquid component to disperse the vegetable oil evenly throughout the liquid component, similar to a homogenization. Step 502 may be performed in a tank with a mixing device, such as a high-shear mixer. In step 503, one or more further ingredients are added and admixed with the precursor liquid to form the NFB. The further ingredients may include one or more of flavoring, sweetener, salt, thickener, stabilizer, vitamin, or mineral. Alternatively, one or more ingredients may be admixed with the precursor liquid before step 501 or step 502. The procedure may also include an optional step 504 of performing a pasteurization or sterilization of the NFB and aims at eliminating or at least reducing microorganisms in the NFB before storage or packaging. Step 504 may be performed in a conventional heater, which may be configured for UHT treatment, ultra-pasteurization, or pasteurization. For example, the NFB may be heated to a temperature in the range of 135°C-150°C, for a period of time in the range of 4-30 seconds.

Fig. 5B is a block diagram of an example processing station 60 for processing PL into NFB in accordance with an embodiment. A formulation sub-station 61 is arranged to receive the precursor liquid, PL, from the storage 50 (Fig. 1). The formulation station 61 may be configured to admix one or more ingredients I2 with PL, for example in accordance with step 501-503 in Fig. 5A. The formulation station 61 may include any number and types of mixing devices that are conventionally used for final formulation. A stabilization station 62 is arranged to receive the NFB from the formulation station 61 and configured to stabilize the NFB by sterilization or pasteurization. The NFB is then output from the stabilization station 62.

Reverting to the mixing station 21 of Fig. 1 and the slurry generation step 203 in Fig. 3, the present Applicant has carried out extensive tests of different types of existing mixing equipment to find a scalable and efficient process that yields an adequate composition of the precursor liquid. It is presently believed to be beneficial for the composition of the precursor liquid to generate the slurry with a D90 particle size of less than about 1500 µm, and preferably less than about 1200 µm or about 1100 µm. Such a particle size facilitates attainment of desirable amounts of sugars, proteins and TS in the resulting precursor liquid. Tests show that a particle size of about 1400 µm (D90) may be attained by use of a high-shear mixer (HSM) operated for 60 minutes, with or without recirculation. More detailed tests revealed a plateau in decreasing particle size with operating time of the HSM, as shown in Table 2.

**Table 2:**

| Time (min) | D90 (µm) |
|---|---|
| 15 | 1690 |
| 30 | 1520 |
| 45 | 1430 |
| 60 | 1400 |

It is thus possible to shorten the operating time of the HSM down to about 30 minutes, or even slightly less, without significantly increasing particle size. This reduces total processing time and energy consumption. For example, an acceptable particle size is obtained when the HSM is operated for 45 minutes.

Tests also show that particle sizes of 1100-1200 µm may be achieved by use of a colloid mill for gap sizes of in the range of 0.15-0.45 mm.

To achieve even smaller particle sizes it has been found beneficial to arrange a plurality of mixing devices to operate on a mixture of water and BSG in series. Preferably, the mixing devices are arranged by decreasing particle size of their respective output fluid. Fig. 6 is a block diagram of an example mixing station 21 that comprises a series of three mixing devices 21A, 21B, 21C, which sequentially process incoming retentate material R2 and water W. The number of mixing devices may alternatively be two, or more than three. A first mixing device 21A receives and processes R2 and W into an output fluid, which is received and processed by a second mixing device 21B, and so on. The last mixing device in the series, here device 21C, outputs the slurry S. In some embodiments, at least one of the mixing devices in the series of mixing devices is a mill, preferably a colloid mill. In some embodiments, the series of mixing devices comprises two colloid mills, one resulting in smaller particle size than the other. In some embodiments, the series of mixing devices comprises a disc mill. It has been found beneficial to arrange the disc mill upstream of the colloid mill(s), to operate as a pre-grinder. Alternatively or additionally, the series of mixing devices may comprise an HSM. It has also been found beneficial to arrange the HSM upstream of the colloid mill(s), to operate as a pre-grinder.

Fig. 7A is block diagram of an example arrangement for fluidly connecting the concentration station 26 to the mixing station 21 in the production line 20 of Fig. 4B. In the following, it is assumed that the concentration station 26 comprises an evaporator, which is configured to receive and evaporate at least part of the liquid component HLC to produce evaporated water EW and a concentrated portion, which forms the precursor liquid, PL. The evaporated water EW may contain other volatiles or molecules, but generally EW consists of more than 97% water, or more than 99% water. The amount of water evaporated from HLC may be in the range of 90%-95% by weight, or more, such that a substantial amount of water may be recycled back to the mixing station 21, for re-use in preparing the slurry S. In addition, EW may exit the evaporator at an elevated temperature, such as in the range of 70°C-80°C or even more, in which this heated water may be used to provide heat in making the slurry S, resulting in significant energy savings.

To return and re-use EW, a return path, such as a suitable return conduit 80, is fluidly connected to an output of the evaporator for conveying EW to the mixing station 21. The return conduit 80 may contain any number of additional processing devices that may be suitable, such as flow control devices, meters, branches, or the like. In addition, the return conduit 80 may convey EW in vapor or liquid form. In some embodiments, the evaporator may have a condenser at its EW outlet.

As shown in Fig. 7A, there are various ways in which EW may be returned to the mixing station 21. For example, as shown via branched fluid return line 80A, after exiting the concentration station 26, EW may be returned directly to an input of the mixing station 21 without further processing by other components of the arrangement. To provide a proper mass balance of EW in the slurry S, the arrangement also may include at least one flow meter 81, such as a mass flow or volumetric flow meter, arranged between the stations 26, 21. In addition, to control the heat of the slurry S, the arrangement also may include at least one temperature sensor 87 upstream of the mixing station 21 to determine the heat of the recycled water being added to the mixing station 21.

In some cases, EW may include unwanted flavors, volatiles, or other impurities, in which case EW may be filtered to remove such impurities using a suitable filter 83. The filter 83 may include a reverse osmosis (RO) filter, which provides a high degree of filtration. Before RO filtration, a pre-filter, such as a 25-micron needle filter bag, may also be used to prolong the life of the RO filter. Because some types of filters may degrade at elevated temperatures, such as at the temperature of EW, the arrangement also may include a cooler 82 upstream of the filter 83. The cooler 82 may include a suitable heat exchanger that is configured to reduce the temperature of EW prior to filtration by a desired amount, such as to a temperature of about 50°C or lower, for example. To preserve the heat energy extracted from EW for re-use, a thermal communication line 80B may be thermally coupled to the cooler 82 and configured to transmit at least part of the extracted heat energy back into the recycled water prior to entering the mixing station 21. In other situations where flavors, volatiles, impurities or other molecules from EW may be desired in the slurry S, the arrangement may include a bypass line 80C that bypasses the filter 83.

A buffer tank 84 may be provided in the arrangement for receiving EW, either from the filter 83 or via the bypass line 80C, to help decouple the input/output capacity of the arrangement. The buffer tank 84 also may be configured to receive water W to mix with EW to form a water mixture that is supplied to the mixing station 21. The water W added to the tank 84 may at least partially compensate for the total water required to generate the slurry S.

Since the water W added to the tank 84 may be cooler than the desired temperature for preparing the slurry S, a heater 85 may be located downstream of the buffer tank 84 for heating the water mixture prior to being added at the mixing station 21. The heater 85 may heat the water mixture to a temperature in the range of 55°C-85°C. As noted above, heat from the cooler 82 (if used) may be added to the water mixture to reduce the amount of external energy required by the heater 85 to bring the water mixture to the desired temperature. In a variant, the heat from the cooler 82 is used for heating the slurry in the mixing station 21.

A flow meter 86 may be located between the buffer tank 84 and the mixing station 21 to determine the mass balance of the water mixture to be added at the mixing station 21 for preparing the slurry S. The flow meter 86 may cooperate with suitable flow control devices (e.g., valves) or suitable control circuitry (e.g., an electronic controller) to determine and meter a desired amount of water mixture to achieve the mixing station 21. The flow meter 86 also may cooperate with the flow meter 81 between the concentration station 26 and the buffering tank 84 for determining the amount of water W to be added to the tank 84. In addition, the temperature sensor 87 may be used to control the quantity of water W in the water mixture and/or to control the heater 85 to achieve a desired temperature of the water mixture.

The arrangement in Fig. 7A may be operated as a continuous loop process in which EW is continuously produced from HLC in the concentration station 26 and returned to the mixing station 21 for producing slurry S. As such, the slurry S will include at least some water from EW and results, after downstream processing, in HLC which is again processed in the concentration station 26 to produce EW. This process may run for several hours or days, depending on the need to clean machinery, replenish raw material, or the like. Although shown as a continuous process, the arrangement may instead be used as a semi-continuous process or a batch process while still providing advantages in water savings. For example, EW may be stored in separate containers following evaporation, and may then be used for generating the slurry S.

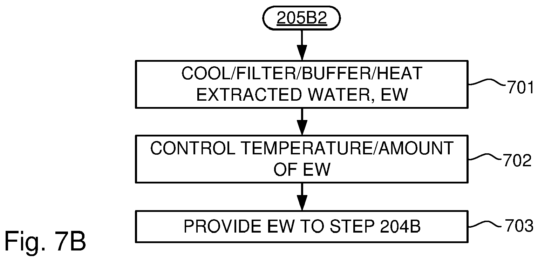

Fig. 7B is a flow chart of an example procedure that may be part of the concentration processing according to step 205B2 in Fig. 4A. The illustrated procedure may be performed by use of the arrangement in Fig. 7A. In step 701, water EW that is extracted by the concentration processing is conditioned by one or more of cooling, filtering and heating and is then stored in a buffer tank. In step 702, the temperature and/or amount of EW is controlled, before or during step 703, in which EW is supplied to form at least part of the water that is added in step 204B of Fig. 4A.

Reverting to Fig. 1, properties of the retentate material R2 are represented by Q2. The present Applicant has identified constraints for Q2 that are believed to provide distinct technical advantages. These constraints will be presented in terms of combinable embodiments in the following.

In some embodiments, the properties Q2 of R2 are approximately identical to the properties Q1 of R1. In this context, approximately identical implies a difference in each property of less than ±10%, and preferably less than ±5%.This implies that R1 is not subject to active processing to produce R2 and that the time from output of R1 to input of R2 is limited.

In some embodiments, R2 has approximately the same relative water content as R1, for example within about ±10%. This implies that R1 is not subject to active drying to produce R2.

In some embodiments, R2 has a relative water content in the range 60%-90%, and preferably in the range 70%-85%. Again, this implies that R1 is not subject to active drying to produce R2.

In some embodiments, R2 has a temperature in the range 40°C-99°C, preferably above 50°C or above 55°C, and preferably below 85°C or below 80°C. It is realized that even in the absence of active cooling, the temperature of the retentate will decrease over time. By restricting the temperature to above 40°C, and preferably above 50°C or above 55°C, the growth of harmful bacteria in R2 is prevented or at least mitigated. By restricting the temperature to below 99°C, and preferably below 85°C or below 80°C, the energy consumption for active heating of the retentate is reduced or even obviated.

In some embodiments, R2 has a temperature that is equal to or less than the temperature of R1. This implies that R1 is not subject to active heating to produce R2.

In some embodiments, the temperature difference between R2 and R1 is less than 15°C, and preferably less than 10°C or less than 5°C. This implies that R1 is not subject to active heating or cooling to produce R2.

In some embodiments, the pH of R2 is equal to or less than the pH of R1. This allows for active acidification of the retentate for stabilization. However, even in the absence of active acidification, the pH may be lower in R2 than in R1 as a result of natural processes in the retentate.

In some embodiments, the pH of R2 is in the range of 5-7. Such a pH range is currently believed to be suitable for production of precursor liquid in the line 20.

In some embodiments, the pH difference between R2 and R1 is less than 1, and preferably less than 0.6, 0.4 or 0.2. This implies that R1 is not subject to active acidification or alkalization to produce R2.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims. Further, while operations are depicted in the drawings in a particular order, this should not be understood as requiring that such operations be performed in the particular order shown or in sequential order, or that all illustrated operations be performed, to achieve desirable results.

## Claims

1. A method of manufacturing a precursor liquid for use in production of a non-fermented beverage, comprising:
obtaining (203) brewer's spent grain, BSG, from a process of producing beer;
mixing (204) the BSG with water into a slurry;
processing (205) the slurry for generation of the precursor liquid; and
storing (206), during a storage time period, the precursor liquid for subsequent use as base material for production of the non-fermented beverage, wherein the storage time period exceeds 2 hours.

2. The method of claim 1, further comprising: performing (207) a stabilization processing of at least one of the slurry or the precursor liquid to reduce its microbiological activity.

3. The method of claim 2, wherein said stabilization processing comprises at least one of heating, cooling or changing pH by acidification or alkalization.

4. The method of any preceding claim, wherein the storage time period exceeds 8 hours.

5. The method of any preceding claim, wherein said storing (206) comprises transporting the precursor liquid from a first plant (1) for producing the beer to a second plant (1') for producing the non-fermented beverage.

6. The method of any preceding claim, wherein said processing (205) the slurry comprises separating (205A) the slurry into a liquid component and a solid component, and forming (205B) the precursor liquid from the liquid component.

7. The method of claim 6, wherein said forming (205B) the precursor liquid comprises separating (205B2) water from the liquid component to generate a concentrated liquid component.

8. The method of claim 7, wherein said separating water (205B2) comprises evaporating water from the liquid component and results in evaporated water, said method further comprises supplying (703) at least part of the evaporated water for mixing with the BSG to form the slurry.

9. The method of any preceding claim, wherein said storing (206) is performed so as to inactivate microbiological activity in the precursor liquid during the storage time period.

10. The method of any preceding claim, wherein said processing (205) the slurry comprises: performing (205C) an enzymatic treatment of the slurry by adding (205C1, 205C2) one or more enzymes to the slurry, and processing (205B1) the slurry or the liquid component to deactivate enzymatic activity.

11. The method of claim 10, wherein the enzymatic treatment comprises, in sequence, heating (205C1) the slurry to a temperature in a range of 40°C-70°C, adding (205C1) one or more carbohydrases to the slurry, adjusting (205C2) the pH of the slurry to a range of 7-11, and adding (205C3) one or more proteases to the slurry, wherein the one or more carbohydrases are allowed to react with the slurry for a first treatment time period in a range of 0.5-12 hours, and the one or more proteases are allowed to react with the slurry for a second processing time period of no more than 2 hours.

12. The method of any preceding claim, wherein said mixing (204) comprises operating a high-shear mixer (21A; 21B; 21C) on a mixture of the water and the BSG.

13. The method of any preceding claim, wherein said mixing (204) comprises operating a plurality of mixing devices (21A, 21B, 21C) that are fluidly connected in series to sequentially process a mixture of the water and the BSG, wherein the plurality of mixing devices (21A, 21B, 21C) comprise at least one mill.

14. The method of any preceding claim, wherein the slurry is generated, by said mixing (204), with a D90 particle size of less than 1500 µm, and preferably less than 1200 µm or 1100 µm.

15. The method of any preceding claim, wherein said mixing (204) is performed to achieve a total solids content of the slurry in a range of 8%-12% by weight.
